# FASCICULE DE BREVET EUROPEEN

(11) **EP 1 720 770 B1**
(45) Date de publication et mention de la délivrance du brevet: **18.08.2010**
(21) Numéro de dépôt: 05708852.8
(22) Date de dépôt: 26.02.2005
(51) Int. Cl.: B65D 35/08, B65D 35/10, B29C 43/02, B29C 43/20, B29C 43/36

(54) **STRUCTURE MULTICOUCHE ET SON PROCEDE DE FABRICATION**
MEHRLAGIGE STRUKTUR UND VERFAHREN ZU DEREN HERSTELLUNG
MULTILAYER STRUCTURE AND PROCESS FOR PRODUCING THE SAME

(30) Priorité: 01.03.2004 CH 3362004; 04.10.2004 CH 16192004; 08.12.2004 CH 20342004; 08.12.2004 CH 20332004
(43) Date de publication de la demande: 15.11.2006
(73) Titulaire: Aisapack Holding SA, 1896 Vouvry (CH)
(72) Inventeur: THOMASSET, Jacques, c/o AISAPACK S.A., CH-1896 Vouvry (CH)
(74) Mandataire: Grosfillier, Philippe
(86) Numéro de dépôt international: PCT/IB2005/050704
(87) Numéro de publication internationale: WO 2005/087601

(56) Documents cités:
- EP-A- 0 668 216
- WO-A-98/56556
- CH-A- 408 766
- FR-A- 2 659 267
- US-A1- 2002 109 267
- PATENT ABSTRACTS OF JAPAN vol. 014, no. 305 (M-0992), 29 juin 1990 (1990-06-29) & JP 02 098415 A (HIROSHI UENO), 10 avril 1990 (1990-04-10) cité dans la demande

## Description

### Domaine de l'invention

L'invention se situe dans le domaine des objets multicouches en matière plastique. Elle concerne en particulier, mais pas exclusivement, le domaine de l'emballage, notamment les têtes de tubes flexibles et les bouchons.

### Etat de la technique

Le brevet US 4 876 052 décrit un objet multicouche (figure 1) caractérisé par le fait qu'une première résine synthétique 7 est complètement emprisonnée à l'intérieur d'une deuxième résine synthétique 6. Cet objet multicouche est obtenu par compression moulage d'une dose composite dans laquelle la première résine est totalement emprisonnée dans la deuxième résine. La structure multicouche décrite dans le brevet US 4 876 052 est particulièrement intéressante pour des objets tels que des récipients ou des couvercles. Cependant, la méthode d'obtention de ces objets multicouches pose plusieurs difficultés. La fabrication de la dose composite avec une première résine totalement emprisonnée dans la seconde nécessite l'extrusion intermittente de la première résine à l'intérieur de la seconde. Comme décrit dans le brevet US 4 876 052, un dispositif de co-extrusion avec un mécanisme de valve à obturation pour la première résine synthétique, contrôle l'écoulement intermittent de ladite première résine. Cependant, ces mécanismes de valve à obturation sont compliqués et onéreux ; et ils ne permettent pas de contrôler l'écoulement intermittent de façon assez précise, répétitive et aisée. Aussi, la réalisation d'objets multicouches selon le brevet US 4 876 052 conduit à des prix comparativement élevés du fait du coût de l'équipement de production.

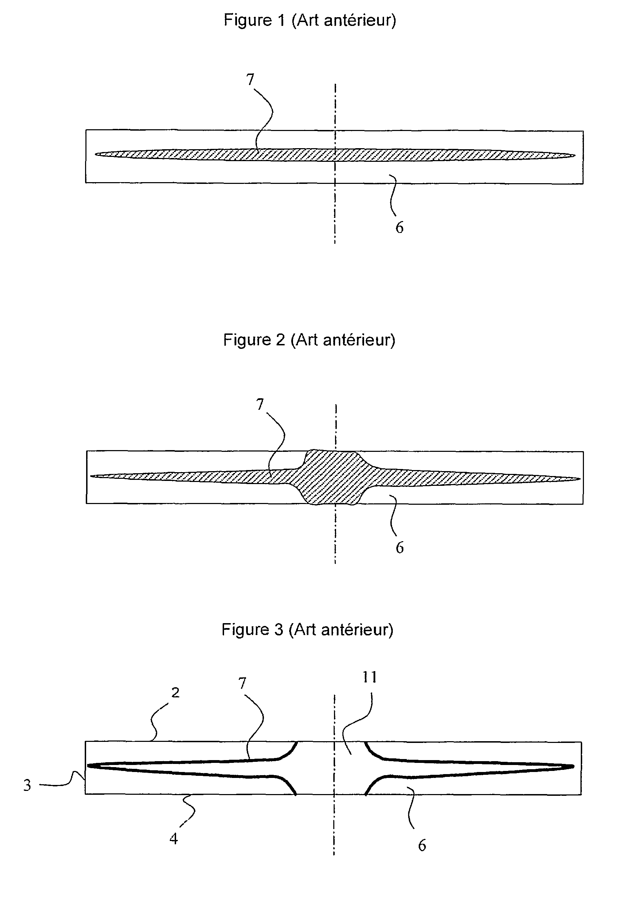

Afin de remédier aux inconvénients du brevet US 4 876 052, le brevet Japonais JP 2098415 propose de réaliser un objet multicouche par compression moulage en partant d'une dose composite caractérisée par le fait que la deuxième résine synthétique couvre seulement les faces latérales de la première résine synthétique. Le moulage par compression de cette dose selon son axe de symétrie conduit à un objet présentant une structure multicouche (figure 2) caractérisée par le fait qu'une première résine 6 emprisonne partiellement une deuxième résine 7. Cependant, les objets multicouches réalisés à partir de deux résines selon le brevet JP 2098415 présentent deux inconvénients majeur ; le premier étant d'avoir la résine barrière 7 exposée en surface centrale de l'objet sur environ 5% de la surface totale de l'objet ; et le second étant de nécessiter une quantité de résine barrière 7 dans l'objet d'au moins 30% de la quantité totale de résine. Cela conduit d'une part à des objets ayant un coût prohibitif, et d'autre part à des objets présentant des propriétés mécaniques fortement modifiées principalement au centre de l'objet. Un autre inconvénient du brevet JP 2098415 réside dans le fait que l'on ne peut que faiblement ajuster la quantité respective des résines 6 et 7, ces quantités étant fixées par la géométrie de l'objet et les écoulements lors de la compression de la dose.

Il est proposé dans le brevet JP 2098415 qui divulgue le préambule des revendications 1 et 8, d'utiliser une dose tri-couche pour remédier en partie aux inconvénients précités. Cette dose est constituée d'une première résine 11 formant la partie centrale de la dose, d'une deuxième résine 7 couvrant seulement les faces latérales de la première résine, et d'une troisième résine 6 couvrant seulement les faces latérales de la deuxième résine. L'écrasement de cette dose composite selon son axe de symétrie conduit à un objet multicouche (figure 3). L'utilisation d'une dose tri-couche présente l'avantage de réduire la quantité de résine barrière 7 utilisée et conduit à des objets présentant des propriétés mécaniques faiblement modifiées par rapport au même objet comportant une seule résine 6. Cependant, la deuxième résine 7 ne couvre pas la partie centrale de l'objet multicouche ce qui conduit à des objets multicouches sans propriété barrière proche de l'axe de symétrie. Cette zone centrale de l'objet non couverte par la couche de résine barrière 7 diminue les performances barrière de l'objet et rend cette solution moins performante.

### Objet de l'invention

Afin de remédier aux inconvénients des brevets US 4 876 052 et JP 2098415, il est proposé un objet multicouche selon le revendication 1 et son mode de réalisation par compression moulage selon le revendication 8. Cet objet est caractérisé par une structure multicouche unique, différente de l'art antérieur, conférant audit objet des propriétés barrières particulièrement avantageuses.

### Description détaillée de l'invention

L'invention sera mieux comprise ci-après au moyen d'une description détaillée des exemples illustrés par les figures suivantes.
La figure 1 montre un objet multicouche de l'art antérieur réalisé selon le brevet US 4 876 052. Cet objet multicouche comporte une couche de résine barrière 7 complètement encapsulée dans la résine 6 formant l'objet.
La figure 2 illustre un objet multicouche de l'art antérieur réalisé selon le brevet JP 2098415. Cet objet multicouche comprend une résine barrière 7 partiellement encapsulée dans la résine 6 formant l'objet. La résine 7 est visible en surface de la partie centrale de l'objet.
La figure 3 illustre un objet multicouche de l'art antérieur réalisé selon le brevet JP 2098415. Cet objet multicouche comprend une couche de résine barrière 7 encapsulée entre les résines 6 et 11 formant l'objet. La couche de résine barrière 7 ne s'étend pas dans la partie centrale de l'objet.
La figure 4 montre un objet multicouche faisant partie de l'invention. Cet objet comporte une couche de résine barrière 7 qui forme un zigzag et s'étend dans tout l'objet. La couche de résine barrière 7 est emprisonnée ou partiellement emprisonnée dans une couche de résine 6.
La figure 6 montre un objet multicouche selon l'invention comportant un orifice 10. Cet objet est caractérisé par une couche de résine barrière 7 qui forme un zigzag et s'étend dans tout l'objet depuis la paroi 3 formant la périphérie de l'objet jusqu'à la paroi 5 formant l'orifice.
La figure 7 illustre le fait que la couche centrale formant le zigzag peut être constituée de plusieurs couches 12, 7, et 12'. En général les couches 12 et 12' sont des couches de résines adhésives qui permettent d'assembler la résine 7 formant la couche barrière avec la résine 6 formant la structure de l'objet.
Les figures 8 et 9 montrent que la couche de résine 7 comporte au moins un zigzag. La figure 8 montre une géométrie de la couche de résine 7 qui peut être obtenue sur des épaules de tube.
La figure 10 illustre une épaule de tube réalisée selon l'invention, et un exemple de répartition de la couche de résine barrière 7 dans l'objet.
Les figures 11 à 15 présentent des doses multicouches utilisées pour réaliser des objets multicouches par compression moulage.

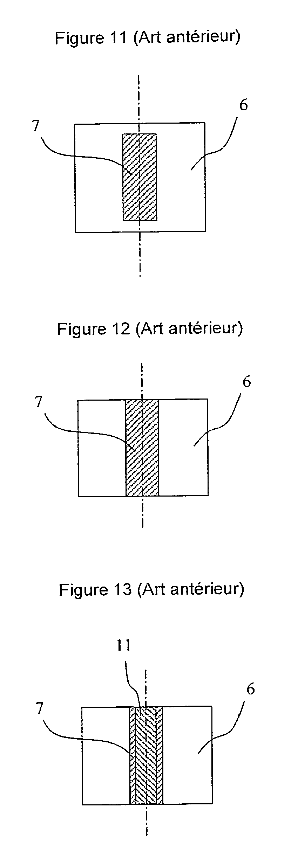

La figure 11 montre une dose de l'art antérieur utilisée pour réaliser des objets multicouches selon le brevet US 4 876 052. Cette dose est caractérisée par le fait que la résine barrière 7 est totalement emprisonnée dans la résine 6.
La figure 12 montre une dose de l'art antérieur, décrite dans le brevet JP 2098415. Cette dose comprend une résine barrière 7 encapsulée latéralement par une deuxième résine 6.
La figure 13 illustre une dose multicouche décrite dans le brevet JP 2098415. Cette dose comprend 3 couches, la couche barrière 7 étant latéralement emprisonnée entre les couches de résines 6 et 11.

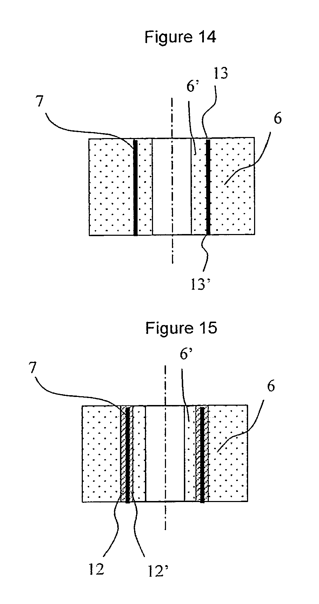

La figure 14 montre une dose multicouche tubulaire utilisée dans le cadre de l'invention. Cette dose comprend un orifice central, une couche interne 6', une couche intermédiaire 7 et une couche externe 6. Les extrémités 13 et 13' de la couche de résine barrière 7 ne sont généralement pas encapsulée dans les résines 6 et 6'.
La figure 15 présente une dose multicouche présentant un orifice. Cette dose comprend 5 couches dont deux couches de résine adhésive 12 et 12' créant une cohésion entre la couche de résine barrière 7 et les couches de résines 6 et 6'.

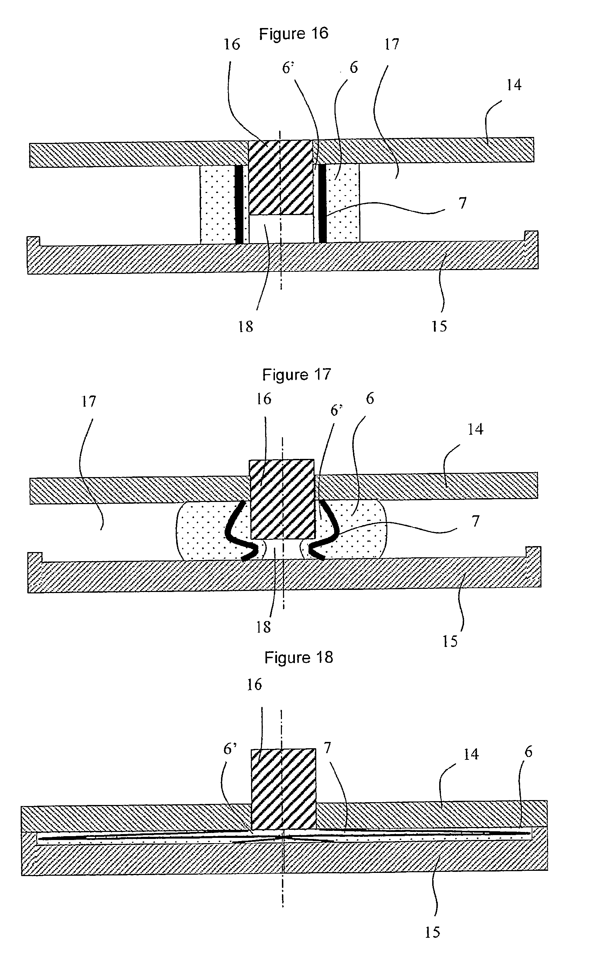

Les figures 16 à 18 montrent une première méthode de réalisation d'objets multicouches selon l'invention.
La figure 16 montre le positionnement d'une dose comportant 3 couches 6, 7 et 6' dans un dispositif de compression comprenant une plaque supérieure 14, une plaque inférieure 15 et un poinçon 16.
La figure 17 montre la déformation de la dose lors de la compression.
La figure 18 montre l'objet multicouche obtenu après compression de ladite dose.

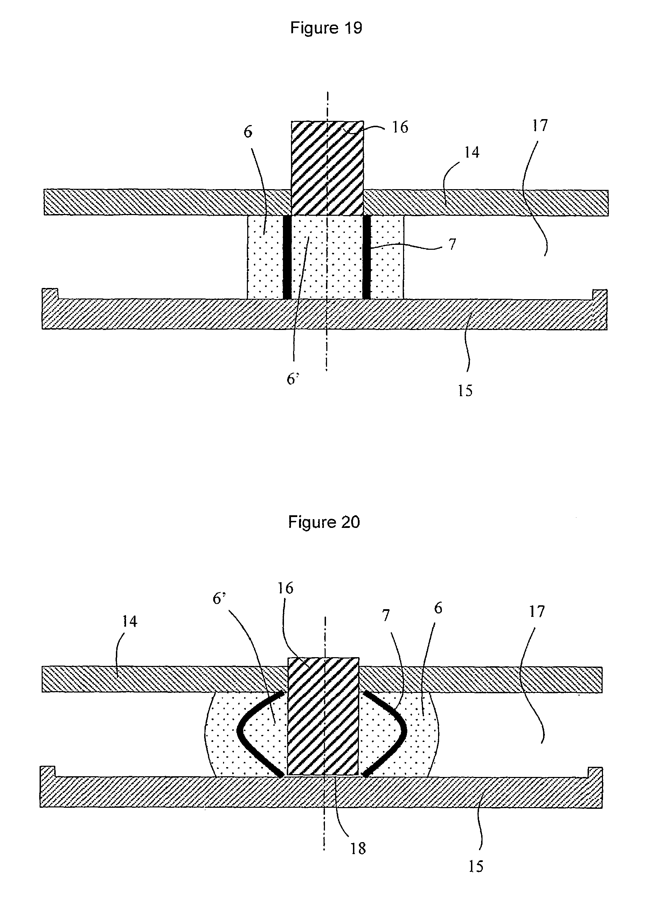

Les figures 19 à 22 montrent une deuxième méthode de réalisation d'objets multicouches selon l'invention, en partant d'une dose multicouche cylindrique.
La figure 19 illustre le positionnement de la dose comportant trois couches 6, 7 et 6' dans un dispositif de compression comportant une plaque supérieure 14, une plaque inférieure 15 et un poinçon 16.
La figure 20 illustre la première phase du procédé qui consiste à comprimer la partie centrale de la dose entre le poinçon 16 et la plaque inférieure 15.

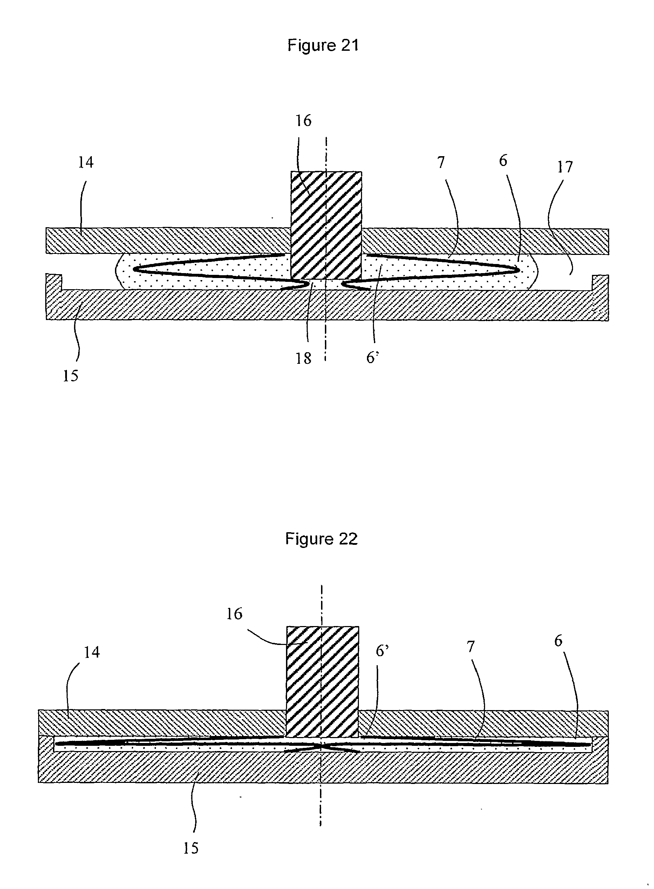

La figure 21 montre une phase ultérieure du procédé de compression. La dose est comprimée entre les plaques 14 et 15 créant un écoulement de résine vers la périphérie ; tandis que le mouvement du poinçon 16 vers le haut crée une augmentation de l'entrefer et écoulement de résine vers le centre.
La figure 22 montre l'objet multicouche obtenu en fin de compression.

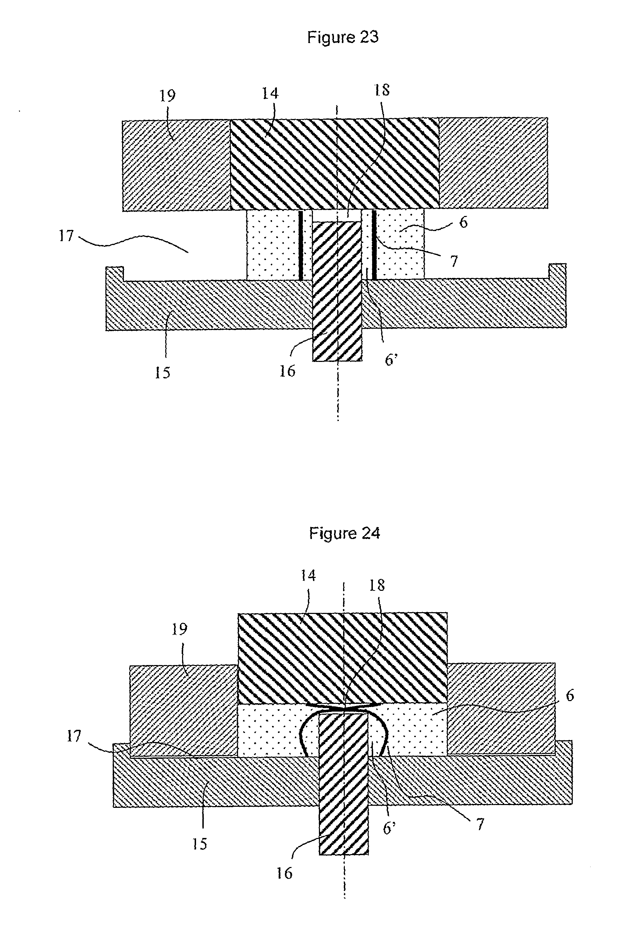

Les figures 23 à 26 montrent une méthode générale pour contrôler une déformation de la dose vers le centre et vers la périphérie de façon séquentielle ou simultanée. Le procédé illustre la fabrication d'objets sans orifice à partir d'une dose comportant un orifice.
La figure 23 montre le positionnement initial de la dose dans le moule de compression.
La figure 24 illustre la méthode pour créer I a déformation de la dose vers le centre afin de remplir la cavité 18.

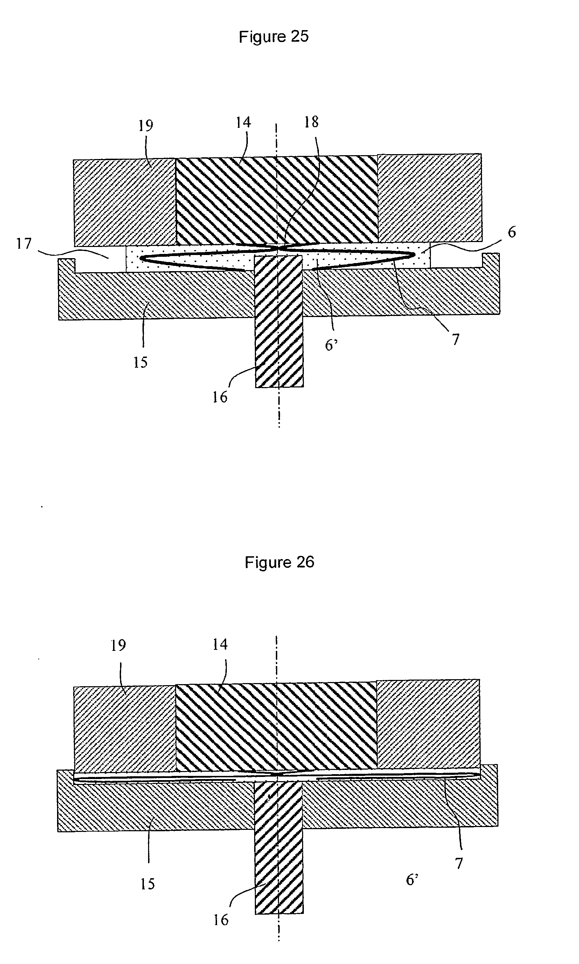

La figure 25 illustre la méthode de remplissage de la cavité périphérique 17.
La figure 26 montre l'objet dans le moule après compression de la dose.

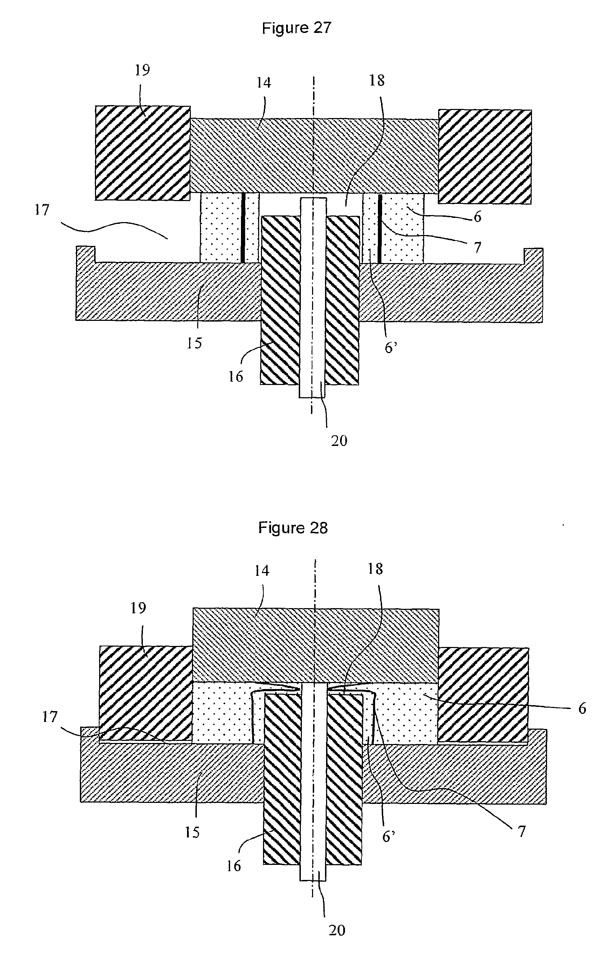

Les figures 27 à 30 illustrent une méthode de fabrication d'un objet comportant un orifice.
La figure 27 montre le positionnement de la dose dans le moule de compression.
La figure 28 illustre la méthode pour créer la déformation de la dose vers le centre afin de remplir la cavité 18 et former l'orifice de l'objet.

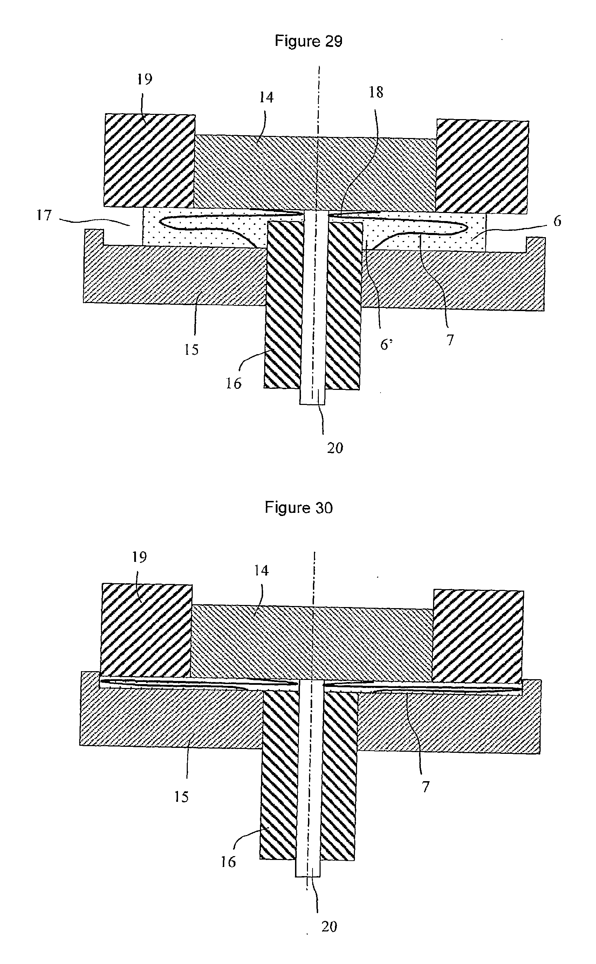

La figure 29 montre l'écoulement de la dose dans la cavité périphérique 17.
La figure 30 montre la disposition de la couche de résine fonctionnelle 7 dans l'objet en fin de compression.

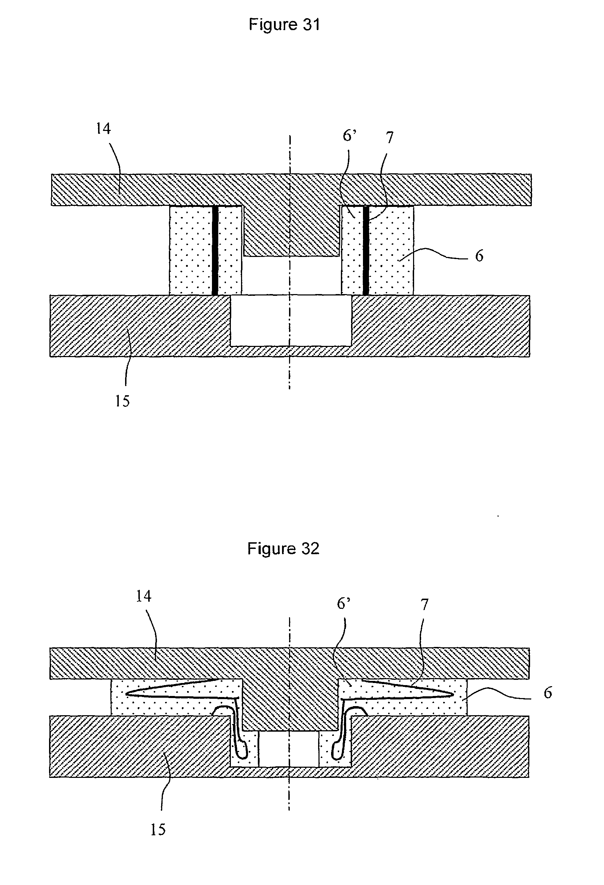

Les figures 31 et 32 montrent une géométrie particulièrement avantageuse d'objet permettant l'utilisation d'un dispositif de compression simplifié. L'objet moulé présente une protubérance axiale dans sa partie centrale.
La figure 31 montre l'alimentation de la dose tubulaire composée des couches de résine 6, 7 et 6' entre le moule supérieur 14 et le moule inférieur 15.
La figure 32 illustre la compression de la dose et la déformation de la couche de résine barrière 7 pendant l'écoulement. La couche de résine 7 est entraînée conjointement vers la périphérie et vers le centre.

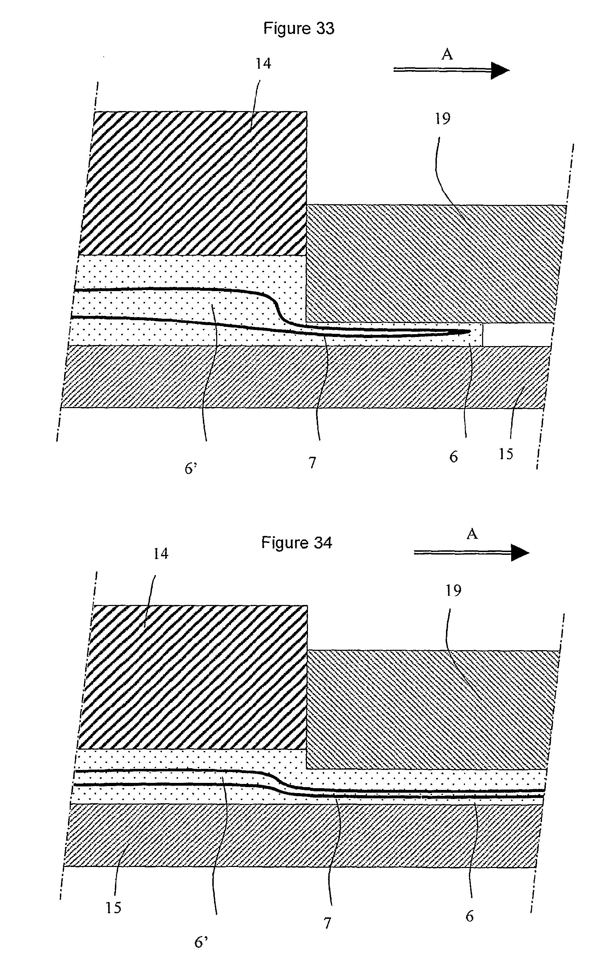

Les figures 33 à 35 illustrent une méthode permettant de contrôler la position dans l'épaisseur de la double couche de résine fonctionnelle 7. Cette méthode permet de rapprocher la dite double couche 7 de la paroi supérieure ou inférieure de l'objet.
La figure 33 montre la première étape de l'écoulement selon cette méthode. L'écoulement de la dose se fait dans la direction A.
La figure 34 montre une étape successive de l'écoulement et le décalage de la double couche 7 vers la paroi inférieure de l'objet du fait de l'augmentation de l'entrefer entre la plaque inférieure 15 et la bague 19.

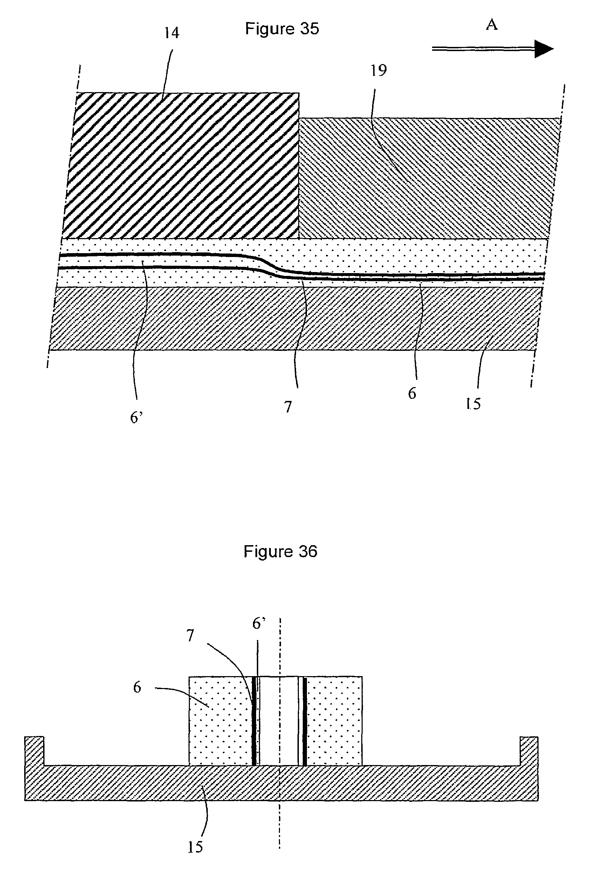

La figure 35 montre la double couche 7 décalée dans l'épaisseur de l'objet en fin de moulage.
Les figures 36 à 38 illustrent la dépendance entre la position de la couche fonctionnelle 57 dans la dose et la géométrie de la dose.

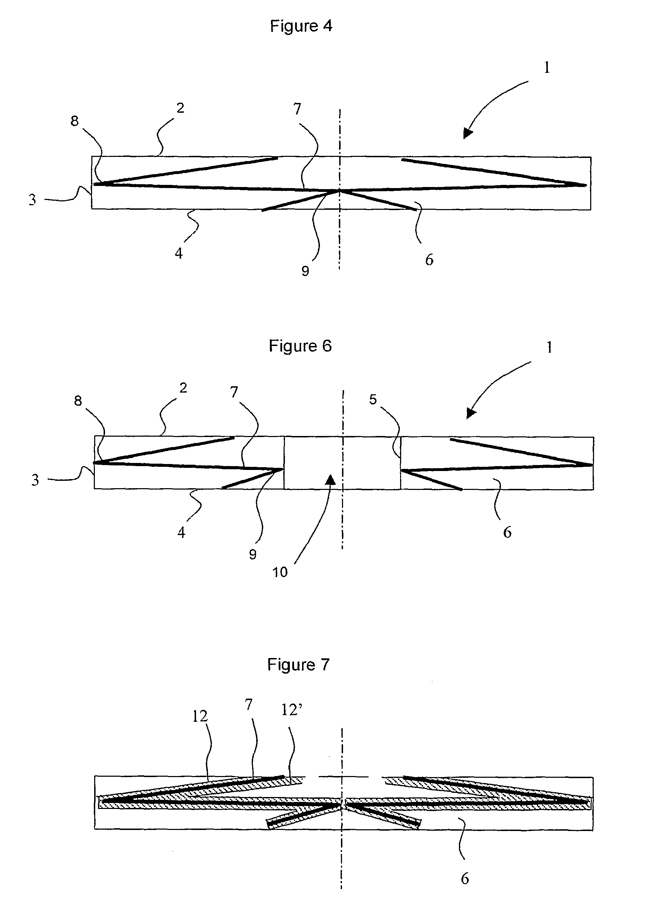

Un premier exemple d'objet multicouche selon l'invention est représenté en vue de coupe sur la figure 4. Cet objet 1 présente une face supérieure 2, une face inférieure 4, et une bordure 3. Une première résine 6 forme les surfaces supérieure, inférieure et la bordure dudit l'objet. Une deuxième résine 7 forme une couche disposée entre la face supérieure et inférieure de l'objet et s'étend dans tout l'objet. Ladite couche de résine 7 forme au moins un double pli, ledit premier pli étant situé proche de la bordure 3 et ledit deuxième pli 9 étant situé proche de l'axe de symétrie de l'objet. La couche de résine 7 formant un double pli caractéristique en forme de zigzag présente deux extrémités libres, la première extrémité libre étant située proche de la surface supérieure 2 et la deuxième surface libre étant située proche de la surface inférieure 4. Les extrémités de la couche de résine 7 peuvent être affleurantes en surface de l'objet ou totalement emprisonnées dans l'objet dépendamment des réglages du procédé.

Un deuxième exemple d'objet multicouche selon l'invention est représenté en vue de coupe sur la figure 6. Cet objet présente un orifice 10, une face supérieure 2, une face inférieure 4, et des bordure 3 5. Dans cet objet multicouche, la couche de résine barrière 7 forme au moins un double pli, un premier pli étant situé proche de la bordure 3 formant la périphérie de l'objet, et un deuxième pli étant situé proche de la bordure 5 formant l'orifice. On retrouve dans cet objet comportant un orifice la disposition caractéristique de la couche emprisonnée 7 formant une géométrie de type « zigzag » et ayant des extrémités libres proches des faces supérieure 2 et inférieure 4 de l'objet.

Dans les objets réalisés selon l'invention, l'épaisseur de la couche de résine barrière 7 est fine et régulière et peut être ajustée. Généralement, une couche de résine barrière d'épaisseur inférieure à 100 microns est suffisante, et une épaisseur inférieure à 50 microns est choisie de préférence. L'épaisseur de la couche de résine barrière 7 peut être contrôlée et modifiée en fonction des propriétés barrières requises et des résines utilisée.

Généralement, il n'y a pas d'adhésion entre la résine barrière 7 et la résine 6 formant l'objet. C'est le cas notamment quand la résine barrière est une résine EVOH et que la résine formant l'objet 6 fait partie de la famille des polyoléfines (PE, PP). Dans certain cas, cette mauvaise adhésion n'est pas préjudiciable à l'utilisation et aux performances globales dudit objet. Cependant, si l'adhésion est nécessaire pour assurer les propriétés mécaniques et barrière dudit objet, une première solution consiste à ajouter un adhésif en mélange dans la résine 6. Une deuxième solution consiste à ajouter une couche d'adhésif de part et d'autre de la couche barrière comme il est fait de façon classique dans les structures multicouches. La figure 7 montre un objet multicouche comportant deux couches 12 et 12' de résine adhésive située de part et d'autre de la couche de résine barrière 7 et emprisonnées dans la résine 6 formant l'objet. Ces structures multicouches sont particulièrement avantageuses.

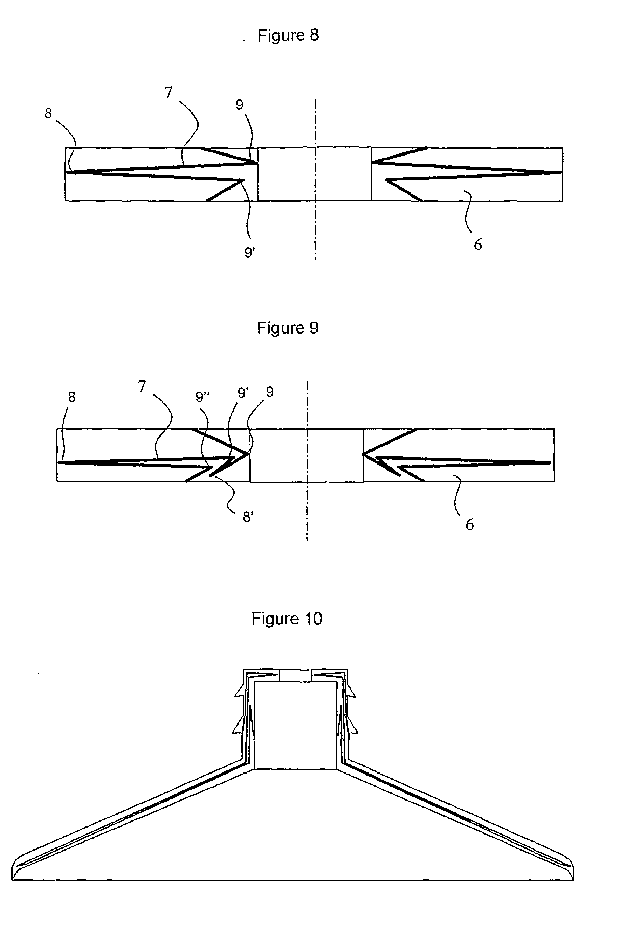

Les objets réalisés selon l'invention ne se limitent pas aux structures multicouches présentant deux plis de la couche de résine barrière 7. La figure 8 montre un objet correspondant à l'invention et qui comporte une couche de résine barrière 7 formant 3 plis, notés respectivement 8, 9, 9'. De même, la figure 9 illustre un objet dont la couche barrière 7 forme 5 plis notés respectivement 8, 8', 9, 9', 9". Ces exemples ne sont pas exhaustifs.

Les objets réalisés selon l'invention présentent des propriétés barrière particulièrement avantageuses. Ceci peut s'expliquer en partie en remarquant que la plupart des objets réalisés selon l'invention présentent au moins une double couche barrière. Cette double protection apporte à la fois des propriétés supérieures ainsi qu'une certaine sécurité au cas ou la couche serait localement défectueuse.

Les résines utilisées dans le cadre de l'invention correspondent aux résines thermoplastiques couramment utilisés, et plus particulièrement celles utilisées dans le secteur de l'emballage. Parmi les résines barrières, on peut citer les copolymères d'éthylène vinyl alcool (EVOH), les polyamides tels que le Nylon-MXD6, les copolymères acrylonitrile methyl acrylate (BAREX), les polymères fluorés tels que le PVDF. Citons également quelques résines pouvant être utilisées pour former le corps 6 de l'objet : polyéthylène (PE), polypropylène (PP), polystyrène (PS), polyamide (PA), polyester (PET). Cette liste n'est pas exhaustive. Lors du choix des résines, il est important de sélectionner des produits ayant des viscosités voisines. En général, il est préférable d'utiliser des résines qui à la température de travail présentent un rapport de viscosité inférieur à 10, et de préférence on choisira un rapport de viscosité inférieur à 3.

Une première méthode de réalisation des objets multicouches selon l'invention comporte une première opération d'extrusion d'une dose multicouche de géométrie tubulaire, suivie d'une opération de moulage de l'objet par compression de ladite dose dans un moule. La figure 14 montre une dose tri-couche, pouvant servir à la réalisation d'objets multicouches tels illustrés sur les figures 4, 6, 8 et 9. Dans cette dose, la matière barrière 7 est emprisonnée latéralement entre deux couches de résine 6 et 6'. Généralement, les extrémités supérieures 13 et inférieures 13' de la couche barrière 7 ne sont pas emprisonnées. La méthode utilisée dans l'invention pour déplacer la couche de résine barrière pendant la compression de la dose repose sur l'exploitation judicieuse des mécanismes d'écoulement et en particulier des gradients de vitesse. En général, on considère que la vitesse d'écoulement est plus faible proche de la paroi du moule qu'au centre de l'écoulement. En utilisant ces différences de vitesse d'écoulement et en contrôlant ces mécanisme par une méthode de compression adaptée, il est possible de maîtriser la propagation de ladite couche barrière (7), et contrôler ainsi la position finale de ladite couche (7) dans l'objet moulé. Une dose de géométrie tubulaire est particulièrement avantageuse, car cette géométrie facilite la propagation de la couche barrière 7 dans toute la pièce, aussi bien périphérie que dans la partie centrale. En effet, la géométrie tubulaire de ladite dose, permet lors de la compression selon l'axe de symétrie de la dose dans un dispositif adapté, de provoquer un écoulement de matière vers l'axe de symétrie de l'objet et vers la périphérie de l'objet. Cet écoulement de résine déplace la couche barrière 7. L'écoulement vers la périphérie entraîne ladite couche barrière 7 jusqu'à la bordure extérieure de l'objet 3 ; et l'écoulement vers le centre entraîne la couche barrière 7 jusqu'à l'axe de symétrie pour un objet sans orifice, et jusqu'à la bordure 5 pour un objet comportant un orifice. La réalisation d'objets multicouches selon l'invention nécessite une optimisation de la géométrie de la dose (diamètre intérieur, diamètre extérieur, hauteur, de la quantité de matière dans chaque couche, et des paramètres de compression.

Dans la plupart des exemples présentés dans ce brevet, pour des raisons de clarté de l'exposé, il a été choisi d'utiliser des doses comprenant seulement trois couches de résines. La figure 15 montre une dose comprenant 5 couches. Les résines formant les couches12 et 12' étant généralement des résines appelées adhésives afin d'adhérer respectivement sur la couche de résine fonctionnelle 7 et les couches de résines 6 et 6' destinées à former la structure de l'objet. Un exemple d'objet obtenu à partir de la dose cinq couches précitée est illustré figure 7.

Un exemple de réalisation d'objet multicouche selon la première méthode est illustré figures 16 à 18. Selon cette méthode, une dose multicouche de géométrie tubulaire est déposée dans un moule (figure 16). Cette dose comprend une résine barrière 7 partiellement emprisonnée entre les résines 6 et 6'. Le dispositif de compression est schématisé par une plaque supérieure 14, une plaque inférieure 15 et un poinçon 16. En position initiale, l'écartement entre le poinçon 16 et la plaque inférieure 15 est inférieur à l'écartement entre les plaques supérieure 14 et inférieure 15. La figure 17 illustre le début de la compression de la dose entre les pièces du dispositif 14, 15 et 16. La dose remplit progressivement les cavités 17 et 18 ; l'écoulement de la dose dans la cavité 17 entraînant la couche de résine barrière 7 vers la périphérie; l'écoulement de la dose dans la cavité 18 entraînant la couche barrière 7 vers le centre. La figure 18 montre la répartition de la couche de résine barrière 7 quand la compression de la dose est terminée. L'écoulement de la dose dans la cavité 17 a permis à la couche 7 de s'étendre jusqu'à la périphérie de l'objet, et l'écoulement de la dose dans la cavité 18 a entraîné la couche 7 jusqu'à l'axe de symétrie de l'objet. D'autres dispositifs peuvent être utilisés pour la réalisation d'objets multicouches à partir d'une dose tubulaire. Ces dispositifs ont en commun qu'ils permettent l'écoulement de la dose vers la périphérie et vers le centre. Ces écoulements peuvent être simultanés ou séquentiels selon les dispositifs choisis et les séquences de pilotage. Il est généralement nécessaire de prévoir une évacuation de l'air emprisonné dans la cavité 18. Cette évacuation de l'air peut se faire avec des évents ou autres moyens couramment employés. Cette méthode de réalisation d'objets multicouches à partir d'une dose tubulaire est particulièrement intéressante pour réaliser des objets présentant un orifice. La méthode de réalisation est similaire à celle présentée sur les figures 16 à 18, la géométrie du moule est adaptée.

Une deuxième méthode de réalisation d'objets multicouches selon l'invention consiste à partir d'une dose multicouche sous forme de jonc. La deuxième méthode consiste à forcer un écoulement de la dose vers le centre et la périphérie de l'objet ; l'écoulement vers la périphérie entraînant la couche de résine barrière vers l'extrémité de l'objet ; et l'écoulement de la dose vers le centre entraînant la couche de résine barrière vers le centre de l'objet. L'invention consiste principalement à entraîner la couche de résine barrière vers le centre de l'objet, cet écoulement étant difficile à créer avec une dose dont la géométrie est un jonc. La méthode consiste à créer un mouvement de compression puis de décompression dans la partie centrale de l'objet afin d'attirer la couche de résine barrière 7 dans la partie centrale.

Un exemple de réalisation d'objets multicouches selon la deuxième méthode est illustré figures 19 à 22. La figure 19 montre l'alimentation d'une dose multicouche de géométrie cylindrique comprenant une première résine 6' formant la partie centrale, une résine barrière 7 formant la couche intermédiaire et une résine 6 formant la couche périphérique de la dose. Cette dose est positionnée dans un dispositif de compression comprenant une plaque supérieure 14, une plaque inférieure 15 et un poinçon 16. La figure 20 illustre la descente du poinçon 20 comprimant la partie centrale de la dose et créant l'écoulement de la résine 6' vers la périphérie. Le mouvement relatif du poinçon 16 et de la plaque inférieure 15 doit être tel que l'entrefer résultant dans la cavité 18 doit être inférieur à l'épaisseur finale de l'objet. Ce mouvement de compression provoque la déformation de la couche de résine barrière 7 vers la périphérie de l'objet. La figure 21 montre une étape ultérieure de la compression de la dose. Le mouvement relatif des plaques supérieures 14 et inférieure 15 crée un écoulement de la dose dans la cavité 17. Cet écoulement entraîne la couche barrière 7 vers la périphérie de l'objet. Parallèlement, le poinçon 16 est animé d'un mouvement vers le haut, créant une augmentation de l'entrefer dans la cavité 18. Ce mouvement relatif entre le poinçon 16 et la plaque inférieure 15 crée un écoulement de la dose vers le centre de l'objet. Cet écoulement entraîne la couche de résine barrière 7 vers le centre. La figure 22 montre la répartition de la couche de résine barrière 7 quand la compression de la dose est terminée. L'écoulement de la dose dans la cavité 17 a entraîné la couche 7 jusqu'à la périphérie de l'objet, et l'écoulement de la dose dans la cavité 18 a entraîné la couche 7 jusqu'à l'axe de symétrie de l'objet. D'autres dispositifs peuvent être utilisés pour la réalisation d'objets multicouches à partir d'une dose multicouche cylindrique. Ces dispositifs ont en commun qu'ils créent l'écoulement de la dose vers la périphérie et vers le centre ; l'écoulement vers le centre étant créé par un mouvement de compression - décompression.

La première méthode de réalisation d'objet multicouche qui consiste à comprimer une dose multicouche comportant un orifice, et la deuxième méthode de compression qui consiste à comprimer une dose de géométrie cylindrique, peuvent être déclinées en un grand nombre de méthode de moulage par compression dépendamment du dispositif de compression utilisé et des mouvements lors de la compression. Ces méthodes consistent à provoquer de façon contrôlée l'écoulement de la dose vers la périphérie ou vers le centre du moule, de façon séquentielle ou simultanée. Une méthode permettant de contrôler précisément l'écoulement vers le centre ou vers la périphérie est illustré figures 23 à 26. Selon cette méthode, il est possible de provoquer un écoulement vers le centre en empêchant l'écoulement vers la périphérie, ou inversement de créer un écoulement vers le centre en empêchant un écoulement vers la périphérie. Il est possible également de provoquer un écoulement simultané dans les deux directions. Un mode de pilotage est illustré figure 23 à 26. La figure 23 montre le positionnement de la dose dans un dispositif comprenant une plaque supérieure 14, une plaque inférieure 15, un poinçon 16 et une bague 19. La dose comprend les couche de résine 6, 7 et 6'. La figure 24 montre comment il est possible de provoquer une écoulement de la dose vers le centre, en réduisant l'entrefer de la cavité 17 entre la plaque inférieure 15 et la bague 19. En fonction de la position relative de la bague 19 et de la plaque inférieure 15, il est possible de provoquer un écoulement uniquement dans la cavité 18, ou des écoulements simultanés dans les cavités 17 et 18. La figure 25 montre un écoulement de la dose dans la cavité 17 suite à l'augmentation de l'entrefer entre la bague 19 et la plaque inférieure 15. La figure 26 montre la répartition de la couche de résine barrière 7 en fin de moulage. En fonction des méthodes de compression choisies, les écoulements sont plus ou moins complexes avec éventuellement des aller-retour des résines pendant la compression. Ces écoulements complexes conduisent à une répartition finale de la couche de résine barrière 7 plus ou moins difficile à décrire comme par exemple celui illustré figure 9.

Les objets comportant un orifice peuvent être réalisés selon les méthodes citées précédemment. Cependant, pour ce type d'objet, il est préférable d'utiliser la première méthode qui consiste à partir d'une dose multicouche de géométrie tubulaire. Un exemple de fabrication d'une pièce comportant un orifice est illustrée figures 27 à 30. Le dispositif de moulage représenté figure 27 est identique au dispositif illustré figure 23 et comporte en plus une tige d'orifice 20. Le dispositif décrit figure 16 pourrait également être utilisé en ajoutant une tige d'orifice 20. La figure 27 montre le positionnement de la dose multicouche tubulaire dans le dispositif. La figure 28 montre comment il est possible de provoquer une déformation de la dose dans la cavité 18 en comprimant la dose entre la plaque supérieur 14 et la plaque inférieur 15, et en étranglant l'écoulement entre la bague 19 et la plaque inférieure 15. En fonction de l'étranglement créé, il est possible de provoquer un écoulement séquentiel ou simultané dans les cavités 18 et 17. Un autre mode de pilotage pourrait consister à commencer la déformation de la dose dans la cavité 17 en étranglant la dose entre le poinçon 16 et la plaque supérieur 14, puis à remplir ensuite la cavité 18. La figure 29 montre la déformation de la dose dans la cavité 17. La figure 30 illustre la répartition des différentes résines en fin de moulage. Les séquences de pilotage des différentes pièces du dispositif dépendent de la géométrie de l'objet, de la rhéologie des résines, de la géométrie de la dose. Une méthode de réglage itérative est souvent nécessaire pour obtenir le positionnement correct de la couche de résine barrière 7 dans l'objet.

Il est possible de réaliser des objets multicouches selon l'invention avec un dispositif de compression simplifié en utilisant avantageusement lors de la compression des particularités géométriques de l'objet permettant un écoulement adapté des résines vers le centre de l'objet et vers la périphérie. Ces objets présentent généralement une protubérance axisymétrique au centre de l'objet. Un exemple est illustré figures 31 et 32. La figure 31 montre l'alimentation de la dose multicouche tubulaire 6, 7 et 6' dans le dispositif comprenant un moule supérieur 14 et un moule inférieur 15. L'écrasement de la dose dans la cavité dudit moule est illustré figure 32. La résine barrière 7 est entraînée conjointement vers la périphérie et vers le centre de l'objet.

Le procédé conduit généralement à des objets multicouches comportant une double couche barrière 7 positionnée de façon relativement centrée et symétrique dans l'épaisseur de l'objet, sauf au niveau des extrémités de ladite couche barrière 7 qui se situent proche de la surface de l'objet. Il peut être souhaité pour certains objets de rapprocher la couche barrière 7 de la surface supérieure ou inférieure de l'objet. Les figure 33 à 35 illustrent une façon contrôler la position dans l'épaisseur de l'objet de la double couche de résine barrière 7. La figure 33 montre la déformation de la dose dans la direction A, lors de la compression entre la plaque supérieure 14 et la plaque inférieure 15. Un entrefer réduit est utilisé entre la bague 19 et la plaque inférieure 15. La figure 34 montre la phase suivante du procédé qui consiste à augmenter l'entrefer entre la bague 19 et la plaque inférieure 15 tandis que la dose continue à être comprimée entre la plaque supérieure 14 et la plaque inférieure 15 provoquant l'écoulement dans la direction A. On observe que la double couche 7 se retrouve alors décalée vers la plaque inférieure 15. La figure 35 illustre le positionnement de la double couche barrière 7 en fin de procédé. Cette double couche est décalée vers la face inférieure de l'objet moulé.

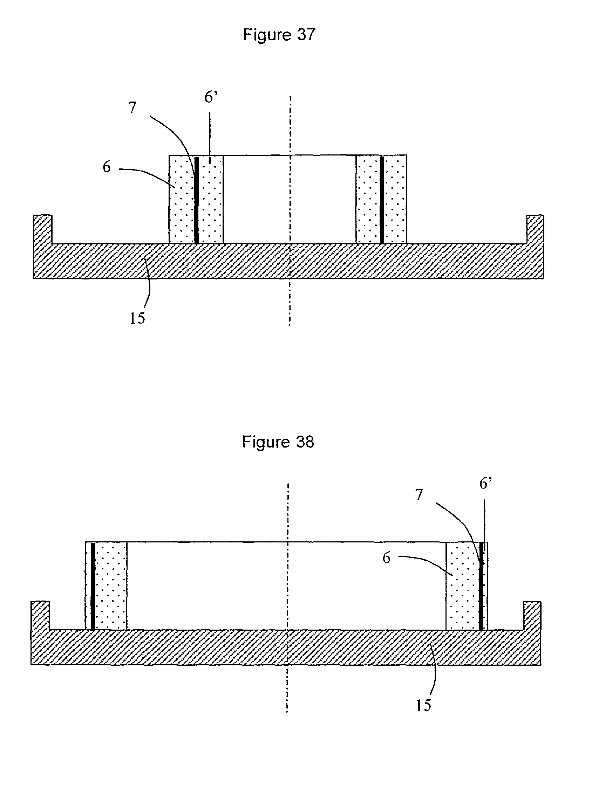

Il existe une relation complexe entre la géométrie de l'objet, la géométrie de la dose, la rhéologie des résines, et la méthode de moulage permettant d'obtenir des objets multicouches selon l'invention. Les figures 36 à 38 montrent le positionnement de différentes doses dans un même moule 15 avant compression. La dose est constituée de trois couches notées respectivement 6, 7 et 6'. La couche 7 est une couche de résine fonctionnelle. Les figures 36 à 38 montrent des doses de diamètre différent pour fabriquer le même objet. Il est important d'observer que la position de la couche de résine fonctionnelle 7 dans la dose varie en fonction du diamètre de la dose. Sur la figure 36, le diamètre de la dose est petit et la couche de résine fonctionnelle 7 est proche de l'orifice de ladite dose, tandis que sur la figure 38 le diamètre de la dose est grand et la couche de résine fonctionnelle 7 est située proche de la surface périphérique de ladite dose. La position de la couche de résine fonctionnelle 7 dans la dose dépend des distances d'écoulement respectives de ladite dose vers le centre et vers la périphérie de l'objet. Si la distance d écoulement vers le centre est plus faible que la distance d'écoulement vers la périphérie, alors la couche fonctionnelle 7 est positionnée proche de l'axe de symétrie de la dose (figure 36) ; et inversement lorsque la distance d'écoulement vers le centre est plus grand que la distance d'écoulement vers la périphérie, alors la couche fonctionnelle 7 est positionnée proche de la surface périphérique de ladite dose (figure 38). Pour des distances à parcourir sensiblement équivalente, la couche fonctionnelle est positionnée sensiblement de façon symétrique dans ladite dose (figure 37). Pour une raison de clarté de l'exposé, il a été choisi la longueur d'écoulement comme paramètre, mais pour une position plus exacte de ladite couche 7 dans la dose, il faudrait raisonner en volume de matière et non en distance d'écoulement.

D'autres méthodes pourraient être utilisées pour fabriquer des objets multicouches selon l'invention. L'ajout de volumes supplémentaires dans la cavité appelés communément masselottes pourrait être utilisés pour compenser un contrôle imprécis du procédé et faciliter les réglages. Ces masselottes sont ensuite détachées de l'objet et peuvent être recyclées. Les masselottes peuvent être utilisées pour fabriquer des objets qui ne sont pas axisymétriques.

Une autre méthode pourrait consister à favoriser l'écoulement vers le centre ou la périphérie en ajoutant des pression ou dépression de gaz dans le moule.

Dans les exemples présentés ici, les doses et les objets sont de géométrie simple, mais il va de soi que l'invention concerne n'importe quelle géométrie de dose et d'objet.

Il existe de nombreuses dispositions de la couche barrière 7 dans la dose. Il peut être avantageux de coupler à l'invention une disposition particulière de la couche barrière 7 ; ladite disposition étant caractérisée par le fait que la couche barrière 7 forme l'enveloppe d'un corps de révolution centré sur l'axe de symétrie. Lorsque la distance de la couche barrière 7 à l'axe de symétrie est variable, la méthode de moulage peut être simplifiée.

L'invention a été décrite avec une seule couche barrière 7 répartie dans la dose. Des doses comprenant plusieurs couches barrières 7 peuvent également être utilisées ; lesdites couches barrières étant toutes centrées sur l'axe de symétrie de ladite dose. Les objets multicouches obtenus sont caractérisés par le fait que les couches barrières se superposent au moins partiellement, et forment au moins un pli double en forme de zigzag.

D'autres géométries de doses peuvent être utilisées. Il a été observé que des doses présentant une partie de leur surface concave sont particulièrement avantageuses. De telles géométries de doses facilitent une bonne répartition de la couche barrière dans l'objet multicouche.

La réalisation d'emballages ou composants d'emballages pour des usages alimentaires nécessite des propriétés d'hygiène élevées. Il est ainsi souvent souhaitable que la couche barrière et les couches adhésives ne soit pas en contact direct avec le produit emballé. Il peut être avantageux d'emprisonner totalement les couches barrières et adhésives dans la dose, de sorte que lesdites couches barrières et adhésives se trouvent totalement emprisonnées dans l'objet. Alternativement, seule une extrémité de la couche barrière peut ne pas être emprisonnée.

## Revendications

1. Structure multicouche (1) en résine synthétique délimitée par une face supérieure (2), des bordures (3,5) et une face inférieure (4) de surface sensiblement identique à celle de la face supérieure (2), ladite structure (1) comprenant :
- une première couche (6) définissant lesdites faces (2,4) et lesdites bordures (3,5),
- une deuxième couche (7), disposée entre lesdites faces (2,4) et lesdites bordures (3,5), de surface au moins égale à celle desdites faces (2,4),
**caractérisée en ce que** la deuxième couche (7) forme au moins un pli double (8,9) en forme de zigzag.

2. Structure multicouche (1) selon la revendication 1 possédant un axe de symétrie.

3. Structure multicouche (1) selon la revendication 1 comportant un orifice central traversant ladite structure.

4. Structure multicouche (1) selon la revendication 3 **caractérisée par le fait qu'**elle forme une épaule de tube.

5. Structure multicouche (1) selon l'une quelconque des revendications précédentes **caractérisée par le fait qu'**une extrémité libre de la deuxième couche (7) est en contact avec l'extérieur de la structure au niveau de l'une desdites faces (2,4).

6. Structure multicouche (1) selon la revendication 5 où une extrémité libre de la deuxième couche (7) est en contact avec l'extérieur de la structure au niveau de la face supérieure (2) alors que l'autre extrémité libre de la deuxième couche (7) est en contact avec l'extérieur de la structure au niveau de la face inférieure (4).

7. Structure multicouche (1) selon l'une quelconque des revendications précédentes **caractérisée en ce que** la deuxième couche (7) forme elle-même une structure multicouche comprenant une couche de résine barrière emprisonnée entre deux couches de résine adhésive.

8. Procédé de fabrication d'une structure multicouche (1) en résine synthétique par compression moulage d'une dose de résine fondue multicouche ; consistant à extruder de façon continue ou discontinue une dose multicouche de résines thermoplastiques comportant au moins une couche de résine fonctionnels (7); à alimenter ladite dose dans un dispositif de compression (14,15,16); à comprimer ladite dose dans le dispositif afin d'obtenir l'objet; le procédé de compression étant **caractérisé par le fait que** l'on entraîne une partie de la couche fonctionnelle (7) vers la périphérie et une autre partie vers le centre ; la couche fonctionnelle (7) ainsi obtenue dans l'objet par ledit procédé formant au moins un double pli en forme de zigzag.

9. Procédé selon la revendication 8 utilisant une dose comportant un orifice.

10. Procédé selon la revendication 8 utilisant une dose pleine.

11. Procédé selon la revendication 8 consistant à effectuer localement un mouvement de compression puis décompression, afin de créer un écoulement de la couche fonctionnelle (7) vers le centre.

## Claims

1. A synthetic resin multilayer structure (1) delimited by a top face (2), borders (3, 5) and a bottom face (4) of surface area substantially identical to that of the top face (2), said structure (1) comprising:
- a first layer (6) defining said faces (2, 4) and said borders (3, 5),
- a second layer (7), disposed between said faces (2, 4) and said borders (3, 5), of surface area at least equal to that of said faces (2, 4),
**characterized in that** the second layer (7) forms at least one zigzag-shaped double fold (8, 9).

2. The multilayer structure (1) as claimed in claim 1, possessing an axis of symmetry.

3. The multilayer structure (1) as claimed in claim 1, containing a central orifice passing through said structure.

4. The multilayer structure (1) as claimed in claim 3, **characterized in that** it forms a tube shoulder.

5. The multilayer structure (1) as claimed in any one of the preceding claims, **characterized in that** a free end of the second layer (7) is in contact with the outer side of the structure at the level of one of said faces (2, 4).

6. The multilayer structure (1) as claimed in claim 5, in which a free end of the second layer (7) is in contact with the outer side of the structure at the level of the top face (2), whereas the other free end of the second layer (7) is in contact with the outer side of the structure at the level of the bottom face (4).

7. The multilayer structure (1) as claimed in any one of the preceding claims, **characterized in that** the second layer (7) itself forms a multilayer structure comprising a layer of barrier resin imprisoned between two layers of adhesive resin.

8. A process for producing a synthetic resin multilayer structure by compression molding of a multilayer dose of molten resin, consisting in extruding continuously or discontinuously a multilayer dose of thermoplastic resins containing at least one layer of functional resin, in feeding said dose into a compression device, in compressing said dose in the device in order to obtain the object, the compression process being **characterized in that** a part of the functional layer is entrained toward the periphery and another part toward the center, the functional layer thus obtained in the object by said process forming at least one zigzag-shaped double fold.

9. The process as claimed in claim 8, using a dose containing an orifice.

10. The process as claimed in claim 8 using a full dose.

11. The process as claimed in claim 8, consisting in locally performing a compression then decompression motion so as to create a flow of the functional layer toward the center.

## Patentansprüche

1. Mehrschichtstruktur (1) aus Kunstharz, die von einer Oberseite (2), Rändern (3, 5) und einer Unterseite (4) mit einer Fläche im Wesentlichen gleich derjenigen der Oberseite (2) begrenzt wird, wobei die Struktur (1) enthält:
- eine erste Schicht (6), die die Seiten (2, 4) und die Ränder (3, 5) definiert,
- eine zweite Schicht (7), die zwischen den Seiten (2, 4) und den Rändern (3, 5) angeordnet ist, mit einer Fläche mindestens gleich derjenigen der Seiten (2, 4), **dadurch gekennzeichnet, dass** die zweite Schicht (7) mindestens einen zickzackförmigen Doppelfalz (8, 9) bildet.

2. Mehrschichtstruktur (1) nach Anspruch 1, die eine Symmetrieachse besitzt.

3. Mehrschichtstruktur (1) nach Anspruch 1, die eine die Struktur durchquerende zentrale Öffnung aufweist.

4. Mehrschichtstruktur (1) nach Anspruch 3, **dadurch gekennzeichnet, dass** sie eine Tubenschulter bildet.

5. Mehrschichtstruktur (1) nach einem der vorhergehenden Ansprüche, **dadurch gekennzeichnet, dass** ein freies Ende der zweiten Schicht (7) in Höhe einer der Seiten (2, 4) mit der Außenseite der Struktur in Kontakt steht.

6. Mehrschichtstruktur (1) nach Anspruch 5, wobei ein freies Ende der zweiten Schicht (7) in Höhe der Oberseite (2) mit der Außenseite der Struktur in Kontakt steht, während das andere freie Ende der zweiten Schicht (7) in Höhe der Unterseite (4) mit der Außenseite der Struktur in Kontakt steht.

7. Mehrschichtstruktur (1) nach einem der vorhergehenden Ansprüche, **dadurch gekennzeichnet, dass** die zweite Schicht (7) selbst eine Mehrschichtstruktur bildet, die eine Sperrharzschicht enthält, die zwischen zwei Haftharzschichten eingeschlossen ist.

8. Verfahren zur Herstellung einer Mehrschichtstruktur (1) aus Kunstharz durch Formpressen einer Mehrschichtdosis von geschmolzenem Harz, das darin besteht, kontinuierlich oder diskontinuierlich eine Mehrschichtdosis von thermoplastischen Harzen zu extrudieren, die mindestens eine Funktionsharzschicht (7) aufweist, die Dosis in eine Pressvorrichtung (14, 15, 16) einzuspeisen; die Dosis in der Vorrichtung zu pressen, um den Gegenstand zu erhalten, wobei das Pressverfahren **dadurch gekennzeichnet ist, dass** ein Teil der Funktionsschicht (7) zum Umfang und ein anderer Teil zur Mitte angetrieben wird, wobei die so durch das Verfahren im Gegenstand erhaltene Funktionsschicht (7) mindestens einen zickzackförmigen Doppelfalz bildet.

9. Verfahren nach Anspruch 8, das eine eine Öffnung aufweisende Dosis verwendet.

10. Verfahren nach Anspruch 8, das eine massive Dosis verwendet.

11. Verfahren nach Anspruch 8, das darin besteht, lokal eine Press- und dann eine Druckentlastungsbewegung durchzuführen, um ein Fließen der Funktionsschicht (7) zur Mitte zu erzeugen.
